# EUROPEAN PATENT APPLICATION

(11) **EP 2 546 459 A1**
(43) Date of publication of application: **16.01.2013**
(21) Application number: 11174002.3
(22) Date of filing: 14.07.2011
(51) Int. Cl.: F01D 5/02, F16D 1/10, F02C 7/36

(54) **A rotor train for a turbine system**

(71) Applicant: Siemens Aktiengesellschaft, 80333 München (DE)
(72) Inventor: Arora, Varun, 122001 Gurgaon (IN); Grewal, Tejinder Singh, 122001 Gurgaon (IN); Gupta, Abhimanyu, 122001 Gurgaon (IN); Sen, Suvadeep, 110019 New Delhi (IN); Sharma, Anmol, 122001 Gurgaon (IN)

(57) **Abstract**

A rotor train (40) for a turbine system (2) is presented. The rotor train (40) includes a first rotor (28) having a first shaft (42), a second rotor (32) having a second shaft (44), wherein the second shaft (44) is operatively coupled to the first shaft (42) through a first teeth arrangement (52) present internally on the first shaft (42) and a second teeth arrangement (50) present externally on the second shaft (44) such that the shafts are axially slidable relative to each other.

## Description

The present invention relates to a turbine system for power generation system and more particularly to a rotor train for turbine system for use in a power generation system.

A power generation system includes a turbine system such as a steam turbine system which utilizes a condenser to condense exhausted steam produced in a boiler to drive the turbine system, this steam is turned into liquid water for recirculation through the system. The turbine system includes a high pressure turbine, an intermediate pressure turbine and a low pressure turbine. A generator is coupled to the low pressure turbine via a drive shaft to generate electricity.

During operation of the power generation system, the turbine system is heated up. The casing and rotor of the turbine is generally made of different material and expand differentially. More particularly, the thermal expansion of the rotor is greater than the casing of the turbine; therefore in a turbine system thermal expansion of the intermediate pressure turbine rotor is transferred to the low pressure turbine rotor. To compensate for the expansion between the casing of the turbines and the rotors, push rods are used between the casings of the intermediate pressure turbine and the low pressure turbine.

However, there is still some differential expansion which can not be compensated through the use of push rod mechanism resulting in accumulation of expansion at the end of the turbine system, requiring significant amount of axial clearance in the design of the turbine system.

It is therefore an object of the present invention to compensate the differential thermal expansion between the rotor train and casing of the turbine system.

The above object is achieved by providing a rotor train according to claim 1 and a power generation system according to claim 13.

The rotor train includes a first rotor having a first shaft and a second rotor having a second shaft, wherein the first shaft and the second shaft are operatively coupled to each other through a first teeth arrangement present internally on the first shaft and a second teeth arrangement present externally on the second shaft such that the shafts are axially slidable relative to each other. Since shafts are slidable the affect of thermal expansion is compensated in the rotor train thereby obviating the need of using a push rod mechanism.

In one embodiment, a protruding portion is coupled to the first rotor of the rotor train for limiting the extent of axial sliding. The protruding portion acts as a stopper and limits axial sliding between the first shaft and the second shaft.

In another embodiment, a groove is present in the second shaft to engage the protruding portion. The groove allows relative movement of the shafts without the protruding portion interfering in the movement of the shafts.

In yet another embodiment, the groove extends partially along the length of the second rotor to limit the axial relative movement of the first shaft and the second shaft. The partial extent of the groove allows movement up to a particular point thereby preventing tripping of the turbine system.

In one embodiment, the protruding portion is bolted to a first face of the first rotor, bolting the protruding portion ensures secure fixing and prevents the portion to detach during operation.

In another embodiment, a thrust bearing is coupled to a second face of the first rotor. The thrust bearing restricts the motion of the first rotor in the direction of the second face.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
- FIG 1: is a schematic diagram of a power generation system;
- FIG 2: is a schematic diagram of a turbine train,
- FIG 3: is a schematic diagram of a rotor train,
- FIG 4: is a sectional view of a first rotor and a second rotor along the lines IV-IV of FIG 3, and
- FIG 5: is a diagrammatical illustration of a fixing ring, in accordance with aspects of the present technique.

Embodiments of the present invention relate generally to a power generation system, such as a fossil fuel power generation system and more particularly to a rotor train for a turbine system of the power generation system. It may be noted that the turbine system may include a gas turbine system or a steam turbine system. Particularly, the embodiments described herein are applicable for steam turbine system as well as the gas turbine system.

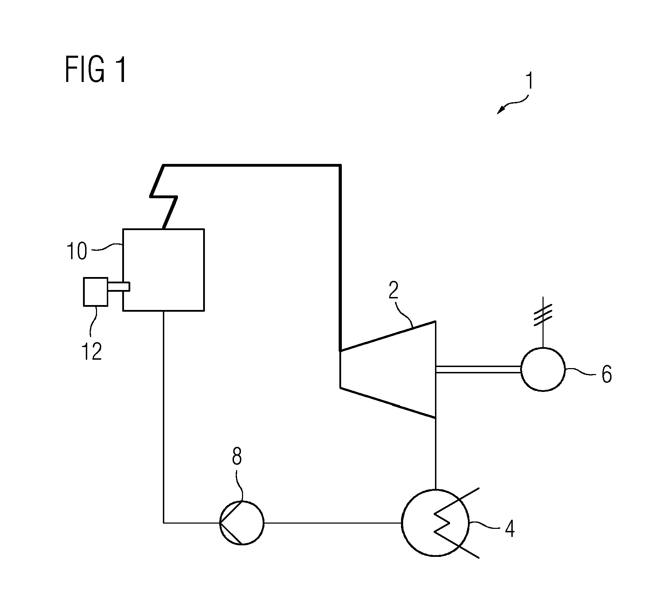

FIG 1 illustrates a schematic diagram of a power generation system 1 in accordance with aspects of the present technique. The power generation system 1 includes a turbine system 2 or a turbine train including one or more turbines. The power generation system further includes a condenser assembly 4, a feed pump 8 connected to the condenser assembly 4, a boiler 10, a heat source assembly 12 and a generator 6 coupled to the turbine system 2.

The heat source assembly 12 such as a burner may include any heat source such as, but not limited to a nuclear heat source or a fossil fuel heat source which enables the power generation system 1 to function. The boiler 10 is coupled to the heat source which is also in a flow communication with the turbine system 2.

The turbine system 2, which may also be referred to as the turbine train may include one or more turbines in a serial flow arrangement such as a high pressure turbine, an intermediate pressure turbine and a low pressure turbine. The one or more turbines are coupled in flow communication with each other. The turbine system 2 is coupled in flow communication with the condenser assembly 4 and operatively coupled to the generator 6 via at least one drive shaft. The condenser assembly 4 is in flow communication with the boiler 10, a feed pump 8 facilitates pumping of condensate from condenser assembly 4 to the boiler 10. The heat source assembly 12 heats a working fluid, such as water in the boiler 10 to produce steam therein. The steam is directed into the turbine system 2 for driving the turbines, which in turn actuate the generator 6 to produce electricity.

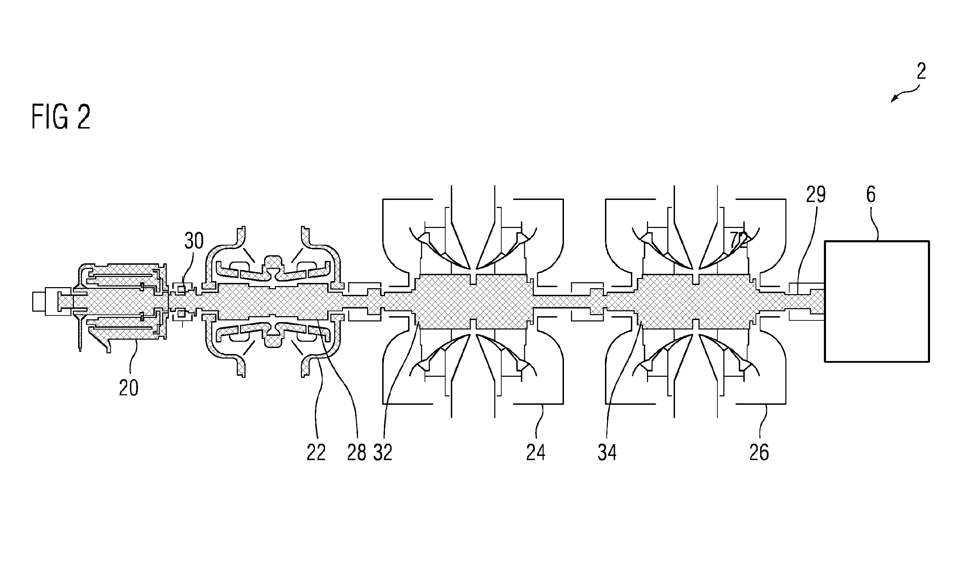

FIG 2 is a diagrammatical illustration of a turbine system, such as the turbine system 2 of FIG 1. In the presently contemplated configuration, the turbine system 2 includes a high pressure turbine 20, a first turbine 22 which is an intermediate pressure turbine, a second turbine 24 and a third turbine 26. The second turbine 24 and the third turbine 26 are two low pressure turbines. The turbines are arranged in flow communication with each other. More particularly, the turbines are in a serial flow arrangement, wherein rotors of the turbines are operatively coupled to each other.

In accordance with the aspects of the present technique, the first turbine 22 includes a first rotor 28 operatively coupled to a second rotor 32 of the second turbine 24. The second rotor 32 is coupled to a third rotor 34 of the third turbine 26 as depicted in FIG 2.

Additionally, the third rotor 34 of the third turbine 26 is coupled to the generator 6 via a drive shaft 29. The turbine system 2 also includes a high pressure turbine 20 disposed axially upstream the first turbine 22. The high pressure turbine 20 and the first turbine 22 are coupled to each other through a coupling. In one embodiment, the coupling may include a thrust bearing 30 which is disposed between the first rotor 28 of the first turbine 22 and a rotor of the high pressure turbine 20. The thrust bearing 30 prevents expansion of the first rotor 28 in a direction towards the high pressure turbine 20. More particularly, the thrust bearing 30 is disposed at a second face (not shown in FIG2) of the first rotor 28.

In accordance with aspects of the present technique, a second thrust bearing 31 may also be disposed between the second rotor 32 and the third rotor 34. The presence of the second thrust bearing 31 allows the second rotor 32 and the third rotor 34 to expand independently from rest of the rotors in the turbine system 2.

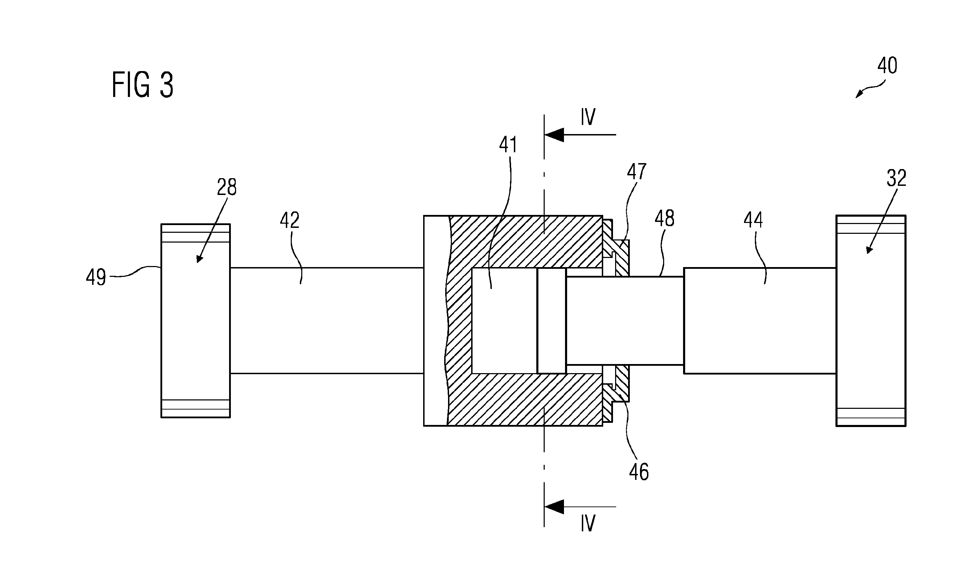

FIG 3 is a diagrammatical illustration depicting a sectional view of a rotor train 40. The rotor train 40 includes the first rotor 28 and the second rotor 32 of the first turbine 22 (see FIG 2) and the second turbine 24 (see FIG 2) respectively. In the exemplary embodiment, the first rotor 28 and the second rotor 32 are operatively coupled to each other.

More particularly, the first rotor 28 includes a first shaft 42, and the second rotor includes a second shaft 44 which are operatively coupled to each other.

In accordance with aspects of the present technique, the first shaft 42 and the second shaft 44 are axially slidable relative to each other. More particularly, the second shaft 44 is slidable inside the first shaft 42 as depicted in FIG 3. It may be noted that the circumference of the second shaft 44 is less than the circumference of the first shaft 42. Also the first shaft 42 includes a hollow portion 41 to allow the second shaft 44 to be inserted in the first shaft 42.

The first shaft 42 of the first rotor 28 includes a second face 49, to which the thrust bearing 30 (see FIG 2) is coupled to. The thrust bearing 30 is disposed between the high pressure turbine 20 and the first turbine 22.

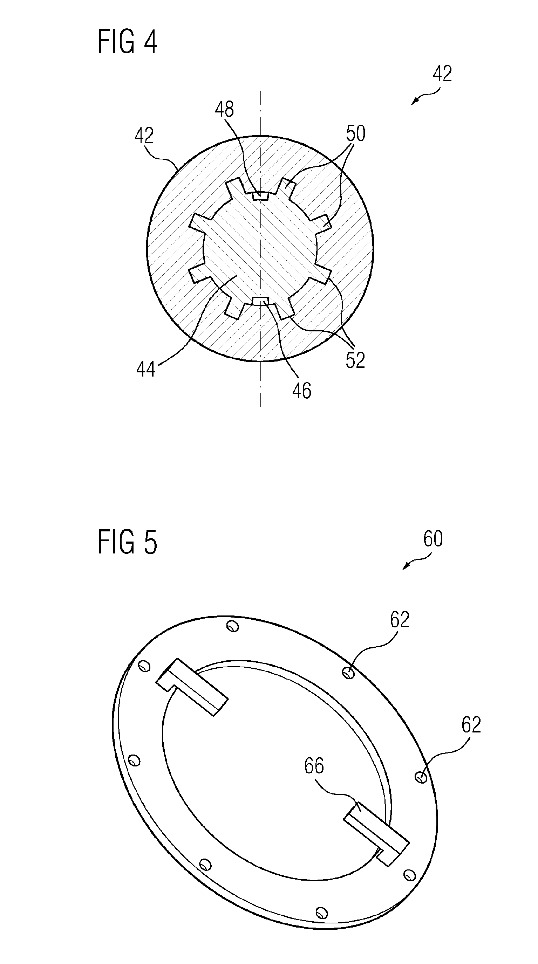

Referring now to FIG 4, a cross sectional view of the rotor train along the lines IV-IV of FIG 3 is depicted. The first shaft 42 includes a first teeth arrangement 52, present internally on the first shaft 42 as depicted. The second shaft 44 includes a second teeth arrangement 50 present externally on the second shaft 44.

Turning again to FIG 3 in combination with FIG 4, the coupling of the first shaft 42 and the second shaft 44 is achieved by the first teeth arrangement 52 and the second teeth arrangement 50, wherein the first teeth arrangement 52 and the second teeth arrangement 50 are engaged with each other thereby transmitting power. The first rotor 28 includes one or more protruding portion 46 which is coupled to a first face 47 of the first rotor 28. More particularly, the protruding portion 46 is operationally coupled to the first face 47 of the first shaft 28. The second shaft 44 includes at least one groove 48 for engagement of the protruding portion 46. In one embodiment, the groove 48 may be present on the first rotor 28 for engagement of the protruding portion 46.

Furthermore, the groove 48 extends partially along the length of the second rotor 32. The protruding portion 46 along with the groove 48 limits the extent of axial sliding of the first rotor 28 and the second rotor 32 relative to each other.

In accordance with aspects of the present technique, the protruding portion 46 may be bolted or welded to the first face 47 of the first rotor 28.

FIG 5 is a diagrammatical illustration of a fixing ring 60; the fixing ring 60 includes a plurality of protruding portions 66 such as the protruding portion 46 of FIG 3 and FIG 4. The fixing ring 60 includes one or more holes 62, which in the presently contemplated configuration are bolting holes. The fixing ring 60 is bolted to the first face 47 of the first rotor 28 through bolts along the holes 62.

In the presently contemplated configuration, the fixing ring 60 is bolted on the first face 47 of the first shaft 42 of the first rotor 28.

The fixing ring 60 provides a fail safe mechanism in situation when the first shaft 42 and the second shaft 44 continue to slide relative to each other. The protrusions 66 in the ring would reach the end of the groove 48 of FIG 3 and prevent any further relative movement between the first shaft 42 and the second shaft 44.

## Claims

1. A rotor train (40) comprising:
- a first rotor (28) having a first shaft (42),
- a second rotor (32) having a second shaft (44),
wherein
the second shaft (44) is operatively coupled to the first shaft (42) through a first teeth arrangement (52) present internally on the first shaft (42) and a second teeth arrangement (50) present externally on the second shaft (44) such that the shafts (42,44) are axially slidable relative to each other.

2. The rotor train (40) according to claim 1,
further comprising at least one protruding portion (46) coupled to the first rotor (28) for limiting the extent of axial sliding.

3. The rotor train (40) according to any of the claims 1 and 2,
wherein the second shaft (44) includes a groove (48) in an axial direction for engagement of the protruding portion (46) .

4. The rotor train (40) according to any of the claims 1 to 3,
wherein the groove (48) extends partially in the axial direction along the length of the second rotor (32).

5. The rotor train (40) according to any of the claims 1 to 4,
wherein the at least one protruding portion (46) is bolted to a first face (47) of the first rotor (28).

6. The rotor train (40) according to any of the claims 1 to 5,
wherein the rotor train comprises a third rotor (34) coupled to the first rotor (28) or the second rotor (32) by a coupling.

7. The rotor train (40) according to any of the claims 1 to 6,
wherein the coupling comprises a thrust bearing (30).

8. The rotor train (40) according to any of the claims 1 to 7,
wherein the thrust bearing (30) is coupled to a second face of the first rotor (28).

9. A turbine system (2) comprising the rotor train (40) according to any of the preceding claims 1 to 8, and comprising
a first turbine (22) with the first rotor (28),
a second turbine (24) with the second rotor (32),
a third turbine (26) with the third rotor (34),
wherein
the second turbine (24) is operatively coupled to the first turbine (22) and the third turbine (26) is operatively coupled to the first turbine (22) or the second turbine (24).

10. The turbine system (2) according to claim 9,
further comprising a high pressure turbine (20) disposed axially upstream the first turbine (22).

11. The turbine system (2) according to claims 9 and 10,
wherein a rotor of the high pressure turbine (20) and the first rotor (28) are coupled via a thrust bearing (30).

12. A power generation system (1) comprising:
- a turbine system (2) comprising:
- a first turbine (22) with a first rotor (28) having a first shaft (42),
- a second turbine (24) with a second rotor (32) having a second shaft (44),
a third turbine (26) with a third rotor (34) having a third shaft,
wherein
the second shaft (44) is operatively coupled to the first shaft (42) through a first teeth arrangement (52) present internally on the first shaft (42) and a second teeth arrangement (50) present externally on the second shaft (44) such that the shafts (42,44) are axially slidable relative to each other, and
- a generator (6) operatively coupled to the turbine system (2) .

13. The power generation system (1) according to claim 12, wherein the third rotor (34) of the third turbine (26) is operatively coupled to the first rotor (28) or the second rotor (32) by a coupling.

14. The power generation system (1) according to any of the claims 12 and 13,
further comprising a high pressure turbine (20) disposed axially upstream the first turbine (22).

15. The power generation system (1) according to any of the claims 12 to 14,
wherein the generator (6) is operatively coupled to the third turbine (26).
